# EUROPEAN PATENT APPLICATION

(11) **EP 2 326 081 A1**
(43) Date of publication of application: **25.05.2011**
(21) Application number: 10177913.0
(22) Date of filing: 21.09.2010
(51) Int. Cl.: H04N 5/44, H04N 5/50, H04N 7/24

(54) **Broadcast receiver and channel changing method thereof**

(30) Priority: 23.09.2009 KR 20090090222
(71) Applicant: Samsung Electronics Co., Ltd., Suwon-si, Gyeonggi-do 442-742 (KR)
(72) Inventor: Ryu, Joon-hyuk, Gyeonggi-do (KR); Kim, Dong-young, Seoul (KR); Youn, Hee-yong, Gyeonggi-do (KR)
(74) Representative: Waddington, Richard

(57) **Abstract**

A broadcast receiver and a channel changing method are provided. The broadcast receiver includes a first receiver which receives broadcast data of a plurality of channels; a second receiver which receives a plurality of keys input sequentially to select one of the plurality of channels; and a controller which processes a changeable channel among a plurality of channels corresponding to at least one key input first among the plurality of keys input before a completion of the input of the plurality of keys from the second receiver.

## Description

### 1. Field

Apparatuses and methods consistent with the exemplary embodiments relate to a broadcast receiver and a channel changing method thereof, and more particularly, to a broadcast receiver and a channel changing method thereof which performs two-way communication.

### 2. Description of the Related Art

Unlike a satellite broadcast or an airwave broadcast which provides one-way broadcast content, a cable broadcast or an Internet protocol (IP) based broadcast can perform two-way communication. If a user changes a channel using a user input unit while viewing a broadcast program, a broadcast receiver performs two-way communication. During the two-way communication, the broadcast receiver first communicates with a broadcast transmission device transmitting the broadcast data, which takes time to change to a new channel. Such time for changing the channel causes inconvenience for a user.

### SUMMARY

According to the present invention there is provided an apparatus and method as set forth in the appended claims. Other features of the invention will be apparent from the dependent claims, and the description which follows.

According to an aspect of an exemplary embodiment, a broadcast receiver is provided that comprises a first receiver which receives broadcast data of a plurality of channels; a second receiver which receives a plurality of keys input sequentially to select one of the plurality of channels; and a controller which processes a changeable channel in advance among a plurality of channels corresponding to at least one key input first among the plurality of keys input before a completion of the input of the plurality of keys from the second receiver.

The broadcast receiver may further comprise a user input unit which is provided to select one of the plurality of channels, wherein the plurality of keys comprises a plurality of number keys input by the user input unit, and the processing the changeable channel in advance operation may include downloading, through the first receiver, of broadcast data of a channel having a first number key as a first digit that is input first among the plurality of number keys.

The processing the changeable channel in advance operation may include downloading, through the first receiver, of broadcast data of a channel having a second number key as a second digit that is input second among the plurality of number keys out of channels whose broadcast data are being downloaded.

The processing the changeable channel in advance operation may include maintaining, through the first receiver, downloading of broadcast data of a channel having a third number key as a third digit that is input third among the plurality of number keys out of the channels whose broadcast data are being downloaded.

The broadcast receiver may further comprise a user input unit which is provided to select one of the plurality of channels, wherein the plurality of keys comprises a plurality of character keys input by the user input unit, and the processing the changeable channel in advance operation includes downloading, through the first receiver, of broadcast data of a channel having a first character key as a first character that is input first among the plurality of character keys.

The processing the changeable channel in advance operation may include maintaining, through the first receiver, downloading of broadcast data of a channel having a second character key as a second character that is input second among the plurality of character keys out of the channels whose broadcast data are being downloaded.

The processing the changeable channel in advance operation may include maintaining, through the first receiver, downloading of broadcast data of a channel having a third character key as a third character that is input third among the plurality of character keys out of the channels whose broadcast data are being downloaded.

The controller of the broadcast receiver may perform an estimation algorithm which estimates a channel to be changed by using metadata with respect to the changeable channel.

The broadcast receiver may include an Internet protocol (IP) TV or an IP set-top box (STB), and the first receiver may include a communication unit which communicates with a router receiving broadcast data of a plurality of channels from an IP broadcast server to receive the broadcast data, and the broadcast data may include a multicast data packet.

The broadcast receiver may further comprise a message generator which generates an Internet group membership protocol (IGMP) message to request subscription of and withdrawal from a multicast group of the broadcast channel.

The controller of the broadcast receiver may control the message generator to generate a subscription request message to the multicast group of the changeable channel and may transmit the message to the router through the communication unit.

The controller of the broadcast receiver may control the message generator to generate a withdrawal request message to the multicast group of the channel whose broadcast data are not downloaded and may transmit the message to the router through the communication unit.

According to an aspect of an exemplary embodiment, there is also provided a channel changing method of a broadcast receiver, the method comprising selecting a changeable channel among a plurality of channels corresponding to at least one key input first out of a plurality of keys input sequentially; processing the changeable channel in advance before a completion of the sequential input of the plurality of keys; and changing to a channel corresponding to the input of the plurality of keys if the sequential input of the plurality of keys is completed.

The selecting the channel operation may include performing an estimation algorithm which estimates a channel to be changed by using metadata to select the changeable channel.

The processing the changeable channel in advance operation may include downloading broadcast data of the changeable channel.

### BRIEF DESCRIPTION OF THE DRAWINGS

The above and/or other aspects will become apparent and more readily appreciated from the following description of exemplary embodiments, taken in conjunction with the accompanying drawings of which:
FIG. 1 is a control block diagram of a broadcast receiver according to an exemplary embodiment;
FIG. 2 is a control block diagram of a broadcast receiver which is an IPTV/IP STB according to an exemplary embodiment;
FIG. 3 illustrates an example of channel zapping time;
FIGS. 4A and 4B are flowcharts which illustrate an example of a channel changing process according to an exemplary embodiment;
FIGS. 5A and 5B are flowcharts which illustrate an example of another channel changing process according to another exemplary embodiment;
FIG. 6 illustrates an example of a key input event according to an exemplary embodiment; and
FIG. 7 illustrates an example of a simulation result of the broadcast receiver according to an exemplary embodiment.

### DETAILED DESCRIPTION

Hereinafter, exemplary embodiments of the present invention will be described with reference to accompanying drawings, wherein like numerals refer to like elements and repetitive descriptions will be avoided as necessary.

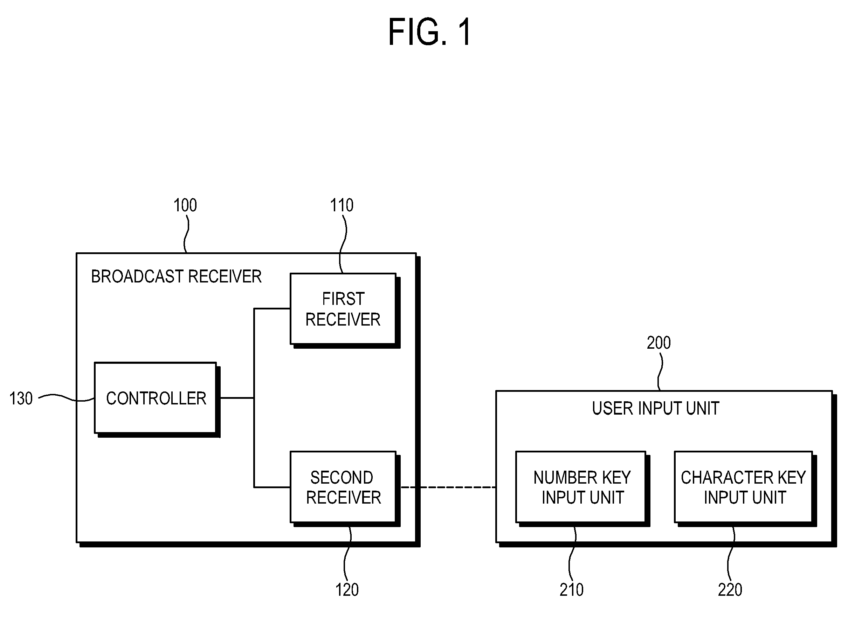

FIG. 1 is a block diagram of a broadcast receiver according to an exemplary embodiment.

As shown in FIG. 1, a broadcast receiver 100 includes a first receiver 110, a second receiver 120 and a controller 130. The broadcast receiver 100 may further include a temporary storage unit (not shown).

More specifically, the broadcast receiver 100 includes the first receiver 110 which receives broadcast data of a plurality of channels from a broadcast data transmission device; the second receiver 120 which receives a plurality of keys input sequentially to select one of the plurality of channels; and a controller 130 which processes a changeable channel in advance among the plurality of channels corresponding to at least one key input first out of the plurality of keys, before completion of the input of the plurality of keys from the second receiver 120. The plurality of keys may be input, for example, by a user. However, other ways of inputting the keys are also contemplated. For example, as an alternatively, the keys may be input according to a transmission from a control device such as a remote controller.

The broadcast receiver 100 may receive a cable broadcast or an IP based broadcast which performs a two-way communication.

The first receiver 110 may receive broadcast data of a plurality of channels from the broadcast data transmission device.

The second receiver 120 receives a plurality of keys input to select one of the plurality of channels. The plurality of keys may be input, for example, by a user. However, other ways of inputting the keys are also contemplated. For example, as an alternatively, the keys may be input according to a transmission from a control device such as a remote controller.

The controller 130 processes a changeable channel in advance from among the plurality of channels corresponding to at least one key input first out of the plurality of keys before completion of the input of the plurality of keys from the second receiver 120. In other words, it may take some time for the plurality of keys to be input, and the controller 130 processes the changeable channel based on, for example, the first key input while the remainder of the plurality of keys are still being input.

The broadcast receiver 100 may further include a user input unit 200 to select one of a plurality of channels. The user input unit 200 may include a number key input unit 210 and/or a character key input unit 220.

The plurality of keys includes a plurality of number keys input from the number key input unit 210 provided in the user input unit 200.

The prior processing of the changeable channel denotes an operation of downloading, through the first receiver 110, broadcast data of a channel having a first number key input as a first digit that is input first among the plurality of number keys.

The controller 130 may further perform an estimation algorithm to estimate the changeable channel by using metadata with respect to a channel having the first number key as the first digit.

The metadata includes, for example, data on user's profile information, channel history, electronic program guide (EPG) data and/or characteristics of a program. For example, the estimation algorithm analyzes a preference channel and channels adjacent to a current channel, i.e., preceding and following channels of the current channel, based on the metadata and estimates a channel which can be changed to by a user.

The controller 130 may download broadcast data of a channel selected out of channels having a number key as a first digit that is input first by the number key input unit 210 of the user input unit 200 after performing the estimation algorithm. For example, if a user inputs a "1" as the first digit, the ultimate channel the user desires could be channel "1", channel "10", channel "11", channel "100", channel "101", etc. Thus, the controller 130 may download broadcast data of a channel indicated by the estimation algorithm out of those possible channels.

If a second number key is input following the preceding number key by the number key input unit 210 of the user input unit 200, the controller 130 continues downloading broadcast data of channels having the second number key as a second digit out of the channels starting with the preceding number key.

The controller 130 may continue downloading broadcast data of a channel after performing the estimation algorithm with respect to the channels having the second number key as a second digit out of the channels starting with the preceding number key. The controller 130 suspends downloading of broadcast data of any channel which is not being downloaded.

If a third number key is input following the second number key by the number key input unit 210 of the user input unit 200, the controller 130 continues downloading broadcast data of a channel having the third number key as a third digit out of the channels having the first number key as the first digit and having the second number key as the second digit. The controller 130 suspends downloading of broadcast data of any channel which is not being downloaded.

The controller 130 stores temporarily in the temporary storage unit the broadcast data which are being downloaded, and deletes broadcast data, which are not being downloaded, from the temporary storage unit.

The plurality of keys input by the user input unit 200 may include a plurality of character keys input by the character key input unit 220 of the user input unit 200.

Thus, the controller 130 may download broadcast data of channels having a first character key as a first character input first by the character key input unit 220 of the user input unit 200, and may download broadcast data of a channel selected after an additional performance of the estimation algorithm. For example, if a user keys in a "B" as the first digit, the ultimate channel the user desires could be channel "B", channel "B0" channel "B1", channel "B00", channel "B21", etc. Thus, the controller 130 may download broadcast data of a channel indicated by the estimation algorithm out of those possible channels.

If a second character key is input following the first character key by the character key input unit 220 of the user input unit 200, the controller 130 continues downloading broadcast data of channels having the second character key as a second character among the channels having the first character key as the first character, and suspends downloading of broadcast data of a channel which is not being downloaded.

The controller 130 may continue downloading broadcast data of a channel after performing the estimation algorithm to channels having the second character key as the second character out of the channels having the first character key as the first character.

If a third character key is input following the second character key by the character key input unit 220 of the user input unit 200, the controller 130 continues downloading broadcast data of channels having the third character key as a third character among the channels having the first character key as the first character and having the second character key as the second character. The controller 130 suspends downloading of broadcast data of any channel which is not being downloaded.

The controller 130 stores temporarily in the temporary storage unit the broadcast data which is being downloaded, and deletes broadcast data, which is not being downloaded, from the temporary storage unit.

If a user inputs a plurality of keys through the number key input unit 210 or the character key input unit 220 of the user input unit 200, the controller 130 downloads broadcast data of channels which are changeable, before completion of input of the plurality of keys. Thus, upon completion of the input of the plurality of keys, the broadcast receiver 100 according to the exemplary embodiment may output broadcast data of the indicated channel since broadcast data of the channel corresponding to the completed key input, i.e., the channel indicated by the completed set of keyed in numbers, have already been downloaded. The broadcast receiver 100 according to the exemplary embodiment allows for faster changing of channels and may create the effect that the channel is changed immediately.

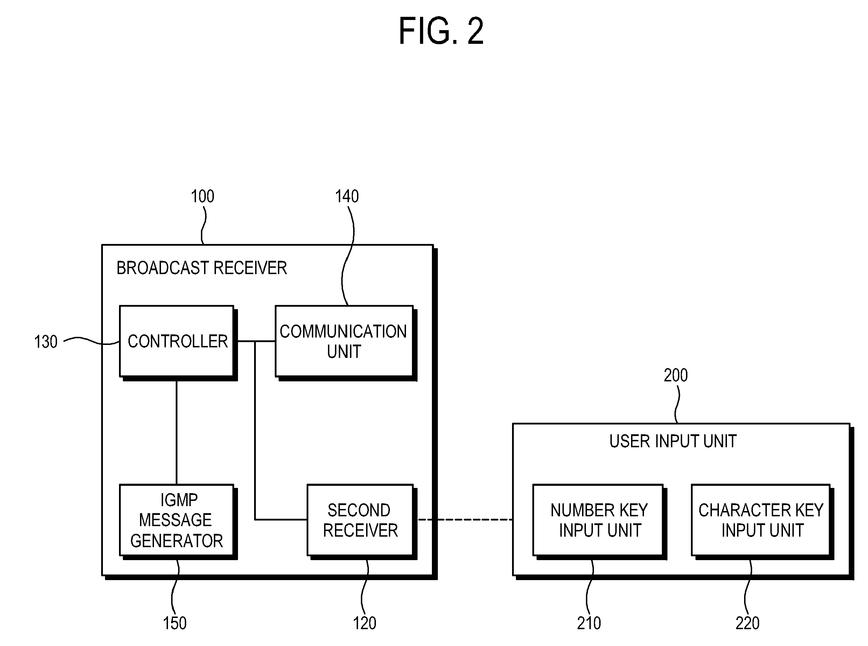

The broadcast receiver 100 may include an IPTV or an IP STB which receives an IP-based broadcast (refer to FIG. 2). In such as case, the broadcast receiver 100 may further include a message generator 150 which generates an IGMP.

If the broadcast receiver 100 includes, for example, an IPTV, it may include a display unit, a digital tuner to perform a decoding operation, a temporary storage unit, a RAM, and various network ports, e.g., an Ethernet port, a universal serial bus (USB) port, an HDMI port, a serial port and/or other AV ports including a component and a composite input and/or output port.

The broadcast receiver 100 may further include a communication unit 140 which communicates with a router receiving broadcast data of a plurality of channels from an IP broadcast server. The broadcast data may include a multicast data packet.

A network which allows transmission of an IP-based broadcast includes a home network and access network. The home network may include an IPTV, an IP STB, a home gateway, a router and/or L2/L3 switch to receive an IP broadcast. The access network may include an IP headend, the Internet and a core network. The IP headend provides video and audio IP data in an IP network by using IP multicast protocol. The IP multicast protocol forwards an IP packet to numerous IPTV/IP STB receivers to share the same data. A multicast stream which is transmitted by the IP headend is transmitted to a number of IPTV/IP STB receivers through several multicast routers. Each broadcast channel has a single IP address of a multicast group assigned.

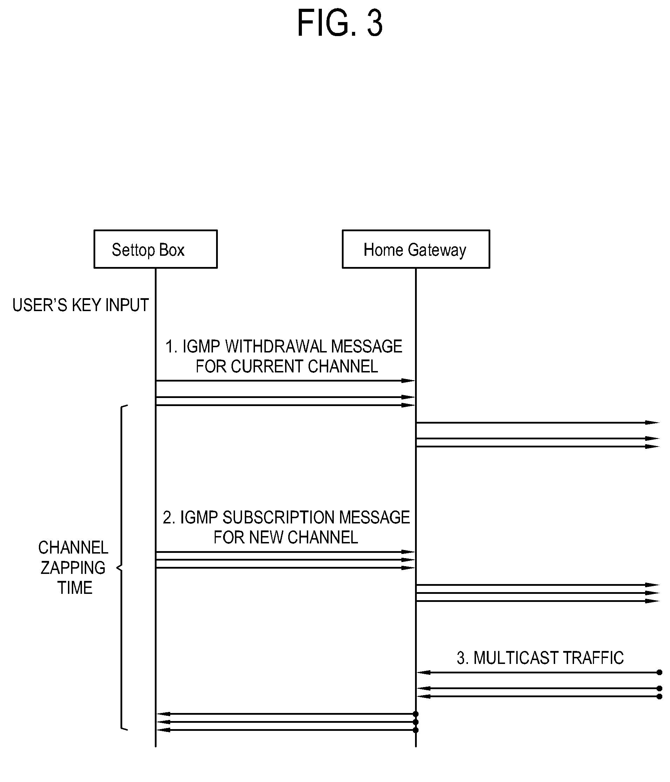

To change a channel in the IPTV/IP STB, a new IP multicast traffic is generated. Since each channel presents a unique multicast group, a broadcast receiver suspends decoding of current channel data, transmits an IGMP join message to the router or L2/L3 switch to join a multicast group of a new channel and transmits an IGMP withdrawal message to withdraw from the multicast group of the current channel if a channel changing signal is input by the user input unit of the IPTV/IP STB. Since the foregoing process is repeated to change a channel in the IP based broadcast, when a user selects a new channel through the user input unit 200, it takes time to output broadcast data of a new channel changed from a current channel and the amount of time taken is called a channel zapping time (refer to FIG. 3).

The channel zapping time may take two to three seconds (short) or up to seven to eight seconds (long). During the channel zapping time, prestored advertisement data are often output. The channel zapping time causes a great inconvenience for a user and there has been an effort to reduce the channel zapping time.

To reduce the channel zapping time, a related art broadcast receiver searches channels adjacent to a current channel, i.e., a preceding channel or a following channel or a viewer's viewing history, and downloads broadcast data of a preferred channel in advance. However, a single household uses a single IP/IP STB in most cases and several family members share the IPTV/IP STB. Since family members often have their own preference channels, respectively, downloading a single preference channel causes a disadvantage to other uses of the IPTV/IP STB. On the other hand, if a user changes to a channel whose broadcast data have not been downloaded, channel zapping time is taken and a user feels inconvenient.

Thus, the broadcast receiver 100 according to another exemplary embodiment selects candidate channels, except the current channel, to be downloaded in advance to thereby reduce a user's inconvenience in viewing a broadcast.

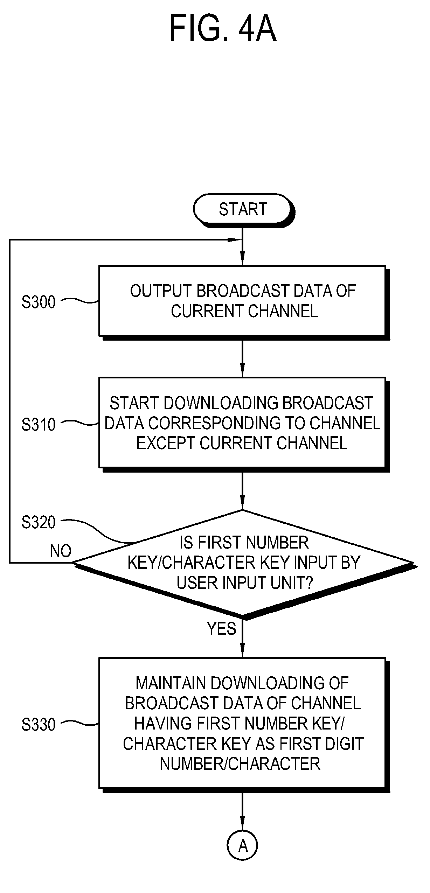

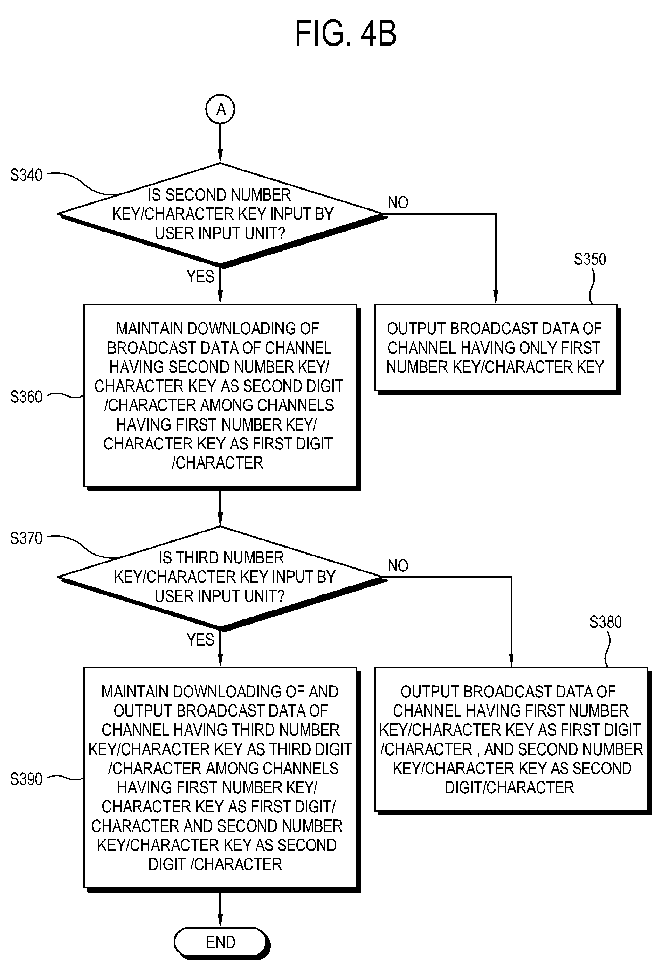

FIGS. 4A and 4B are flowcharts which illustrate a channel changing process of the broadcast receiver 100 according to an exemplary embodiment of the present invention.

As shown in FIGS. 4A and 4B, if a user views a current channel, for example, a channel No. 5 (S300), the controller 130 of the IPTV/IP STB controls the IGMP message generator 150 to generate a join message to join a multicast group including all channels except the channel No. 5, transmits the message to the router through the communication unit 140. If an approval message is transmitted by the multicast group and if a multicast data packet which is broadcast data of all channels except the channel No. 5, is transmitted to the router from the IP headend, the IPTV/IP STB starts downloading the multicast data packet from the router through the communication unit 140 (S310).

If a No. 1 key signal is input as a first number key by the number key input unit 210 of the user input unit 200 of the IPTV/IP STB (S320), the controller 130 of the broadcast receiver 100 sorts out all channels having the No. 1 as the first digit, for example, channels Nos. 1, 10 to 19, 100 to 199, etc., and continues downloading of the multicast data packet of the channels (S330), and transmits a withdrawal message generated by the IGMP message generator 150 to inform of a withdrawal from the multicast group including all channels except the foregoing channels to the router through the communication unit 140 to thereby suspend downloading of the multicast data packet which is currently downloaded.

If a key is not input by the user input unit 200 (S340), a multicast data packet of the channel No. 1 which is currently downloaded is output (S350). Outputting the multicast data packet denotes outputting the multicast data packet of the channel No. 1 to the TV connected to the IP STB if the broadcast receiver 100 includes the IP STB. If the broadcast receiver 100 includes the IPTV, outputting the multicast data packet denotes decoding the multicast data packet of the channel No. 1 which is currently downloaded and outputting the multicast data packet to a screen of the IPTV.

If a No. 5 key signal is input to the IPTV/IP STB as a second key input by the user input unit 200 (S340), the controller 130 of the broadcast receiver 100 sorts out all channels having the No. 5 as the second digit, for example, channels No. 15 and 150 to 159 out of the channel Nos. 1, 10 to 19, 100 to 199, etc., and continues downloading of a multicast data packet of the channels (S360) and transmits a withdrawal message generated by the IGMP message generator 150 to inform of a withdrawal from the multicast group including all channels except the foregoing channels to the router through the communication unit 140 to thereby suspend downloading of the multicast data packet which is currently downloaded.

If a key is not input by the user input unit 200 (S370), a multicast data packet of the channel No. 15 which is currently downloaded is output (S380).

Outputting the multicast data packet denotes outputting the multicast data packet of the channel No. 15 to the TV connected to the IP STB if the broadcast receiver 100 includes the IP STB. If the broadcast receiver 100 includes the IPTV, the outputting the multicast data packet denotes decoding the multicast data packet of the channel No. 15 which is currently downloaded and outputting the multicast data packet to a screen of the IPTV.

If a No. 8 key signal is input to the IPTV/IP STB as a third key input by the user input unit 200 (S370), the controller 130 of the broadcast receiver 100 continues downloading of and outputs a multi cast data packet of a channel No. 158 out of channels having No. 1 as the first digit and No. 5 as the second digit, for example, channel Nos. 15 and 150 to 159, etc. (S390), and transmits a withdrawal message generated by the IGMP message generator 150 to inform of a withdrawal from the multicast group including all channels except the foregoing channels to the router through the communication unit 140 to thereby suspend downloading of the multicast data packet which is currently downloaded.

Outputting the multicast data packet denotes outputting the multicast data packet of the channel No. 158 to the TV connected to the IP STB if the broadcast receiver 100 includes the IP STB. If the broadcast receiver 100 includes the IPTV, the outputting the multicast data packet denotes decoding the multicast data packet of the channel No. 158 which is currently downloaded and outputting the multicast data packet to a screen of the IPTV.

The foregoing exemplary embodiment may also apply to case where a plurality of character keys are input sequentially by the character key input unit 220 of the user input unit 200. Additionally, although the case has been illustrated above of a situation in which up to three keys are input, it is possible to extend the inventive concept to a case where more than three keys are input sequentially.

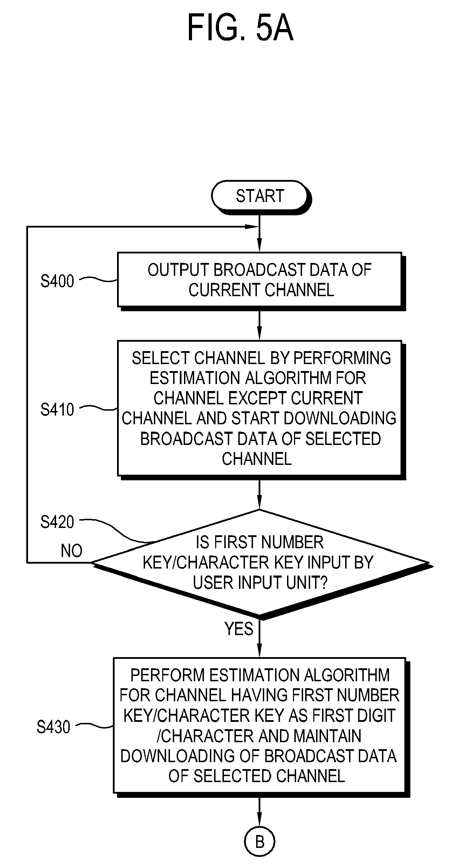

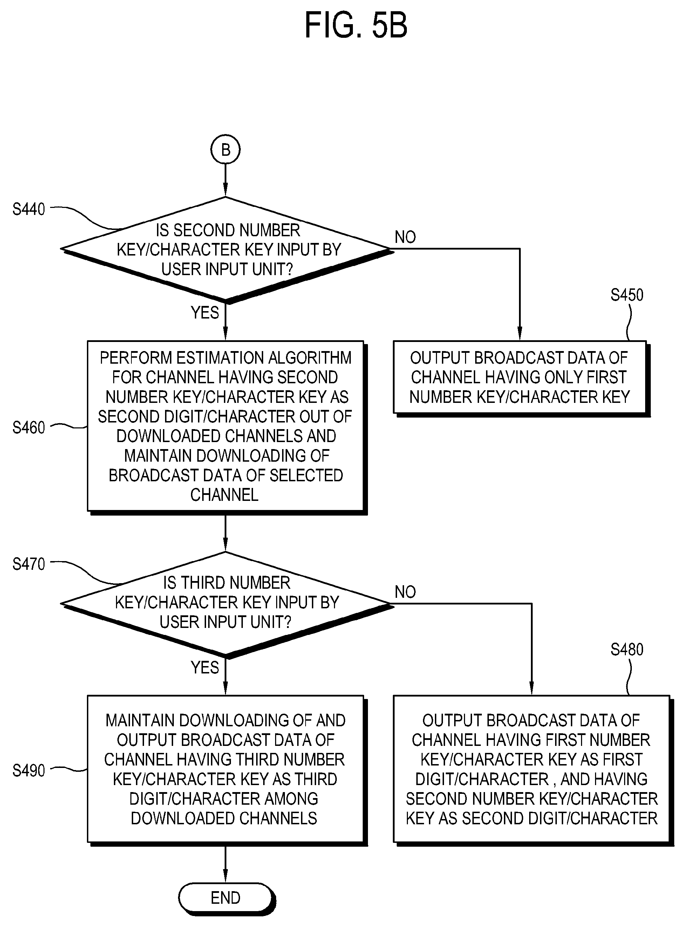

FIGS. 5A and 5B are flowcharts which illustrate another channel changing process of a broadcast receiver according to another exemplary embodiment. In this exemplary embodiment, the estimation algorithm is performed to help select channels to start downloading.

As shown in FIGS. 5A and 5B, if a user currently views CNN (S400), the controller 130 of the broadcast receiver 100 selects channels by performing the estimation algorithm on all channels except CNN and transmits a join message generated by the IGMP message generator 150 to join the multicast group including the selected channels to the router through the communication unit 140 of the IPTV/IP STB. If an approval message is transmitted by the multicast group and when the multicast data packet which is broadcast data of the selected channels is transmitted to the router by the IP headend, the IPTV/IP STB starts downloading the multicast data packet from the router through the communication unit 140 (S41 0).

If a character "a" key signal is input as a first character key by the character key input unit 220 of the user input unit 200 to the IPTV/IP STB (S420), the controller 130 of the IPTV/IP STB sorts out channels having the character "a" as the first character and performs the estimation algorithm to the selected sorted channels to select channels again (S430). The controller 130 continues downloading of the multicast data packet of the selected channels (S430) and transmits a withdrawal message generated by the IGMP message generator 140 to inform of the withdrawal from the multicast group including all channels except the foregoing channels to the router through the communication unit 140 to thereby suspend downloading of the multicast data packet which is currently downloaded.

If no further keys are input by the user input unit 200, a multicast data packet of a channel having the character "a" which is currently downloaded is output (S450).

Outputting the multicast data packet denotes outputting the multicast data packet of the channel having the character "a" as the channel name to the TV connected to the IP STB if the broadcast receiver 100 includes the IP STB. If the broadcast receiver 100 includes the IPTV, the outputting the multicast data packet operation denotes decoding the multicast data packet of the channel having the character "a" as the channel name which is currently downloaded and outputting the multicast data packet to a screen of the IPTV.

If a character "d" key signal is input as a second character key by the character key input unit 220 of the user input unit 200 to the IPTV/IP STB (S440), the controller 130 of the IPTV/IP STB sorts out channels having the character "d" as the second character, i.e., starting with the characters "ad" out of the channels having the character "a" as the first character, and performs the estimation algorithm to the selected sorted channels to select channels again. The controller 130 continues downloading of the multicast data packet of the selected channels (S460) and transmits a withdrawal message generated by the IGMP message generator 140 to inform of the withdrawal from the multicast group including all channels except the foregoing channels to the router through the communication unit 140 to thereby suspend downloading of the multicast data packet which is currently downloaded.

If no further keys are input by the user input unit 200, a multicast data packet of the channel having the characters "ad" as the channel name which is currently downloaded is output (S480).

Outputting the multicast data packet denotes outputting the multicast data packet of the channel having the characters "ad" as the channel name to the TV connected to the IP STB if the broadcast receiver 100 includes the IP STB. If the broadcast receiver 100 includes the IPTV, the outputting the multicast data packet denotes decoding the multicast data packet of the channel having the characters "ad" as the channel name which is currently downloaded and outputting the multicast data packet to a screen of the IPTV.

If a character "s" key signal is input as a third character key by the character key input unit 220 of the user input unit 200 to the IPTV/IP STB (S470), the controller 130 of the IPTV/IP STB continues downloading of and outputs a multicast data packet of a channel having the characters "ads" as the channel name out of the channels having the character "a" as the first character and having the character "d" as the second character, i.e., starting with the characters "ad" (S490) and transmits the withdrawal message generated by the IGMP message generator 140 to inform of the withdrawal from the multicast group including all channels except the foregoing channels to the router through the communication unit 140 to thereby suspend downloading of the multicast data packet which is currently downloaded.

Outputting the multicast data packet denotes outputting the multicast data packet of the channel having the characters "ads" as the channel name to the TV connected to the IP STB if the broadcast receiver 100 includes the IP STB. If the broadcast receiver 100 includes the IPTV, the outputting the multicast data packet denotes decoding the multicast data packet of the channel having the characters "ads" as the channel name which is currently downloaded and outputting the multicast data packet to a screen of the IPTV.

The foregoing exemplary embodiment may also apply to the case where a plurality of keys is input sequentially by the number key input unit 220 of the user input unit 200.

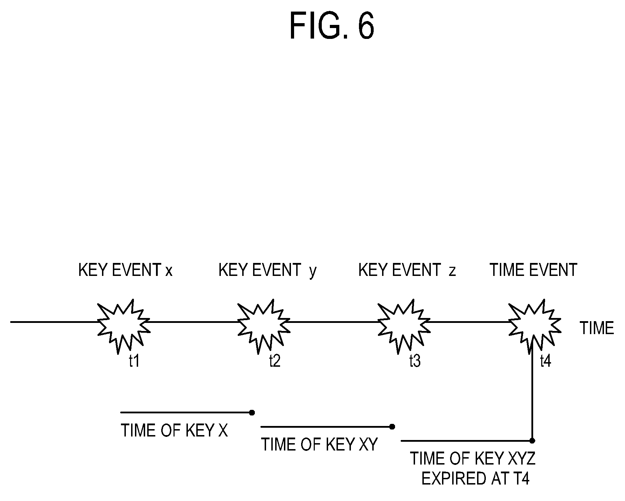

FIG. 6 illustrates an example of a plurality of key input events of the user input unit 200. Referring to FIG. 6, the exemplary embodiments will be described as follows.

According to the foregoing exemplary embodiments, the input of the first number key/character key is a key event x. During the time after the key event x, the controller 130 starts downloading broadcast data of channels having the first number key/character key as the first digit/character. Following the key event x, the input of the second number key/character key is a key event y. During time after the key event y, the controller 130 of the broadcast receiver 100 continues downloading of the broadcast data of channels having the second number key/character key as the second digit/character out of the channels having the first number key/character key as the first digit or character. That is, the controller 130 continues downloading channels matching the first two keys xy. Following the key event y, the input of the third number key/character key is a key event z. During time after the key event z, the downloaded broadcast data of the channel having the third number key/character key as the third digit/character out of channels having the second number key/character key as the second digit/character and the first number key/character key as the first digit/character are output. That is, the controller 130 continues downloading the channel matching the first three keys xyz.

The broadcast receiver 100 according to the exemplary embodiments downloads and outputs the broadcast data of a channel which is changeable corresponding to at least one key input out of the plurality of key inputs before completion of the plurality of keys input through the user input unit 200. Thus, a user may view the broadcast data of the changed channel upon completion of the key input by the user input unit 200.

The broadcast receiver 100 according to the exemplary embodiments produces a very short (almost zero) channel zapping time in changing a broadcast channel.

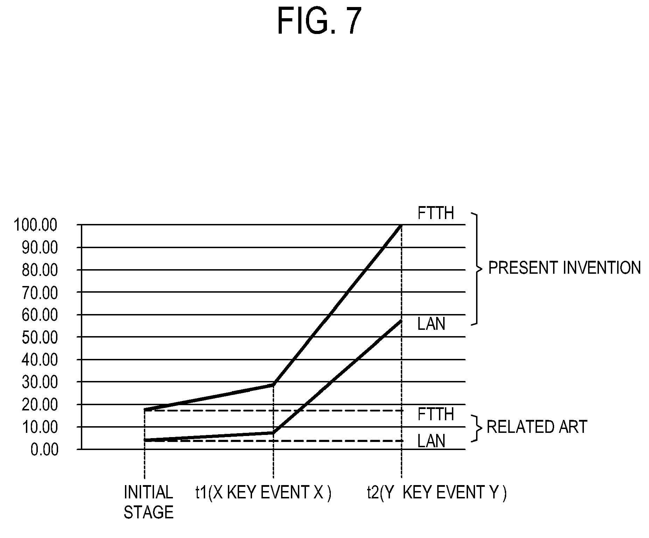

FIG. 7 illustrates a simulation result of the broadcast receiver 100 according to an exemplary embodiment of the present invention. Referring to FIG. 7, the effects of the exemplary embodiments will be described in more detail.

A simulation was performed to evaluate the effects of the exemplary embodiments.

Most Korean households have a LAN and an available network band of about 100 Mbps. A common number of provided channels is approximately 80 channels. Some households have fiber to the home (FTTH), in which case it is more common to receive at least 200 channels. Thus, the inventors have used a number of available channels of 200 channels in consideration of the two types of networks, and taken into account of voluntary distribution of channel numbers and the channel estimation algorithm. The estimated channels are voluntary numbers having a wide spectrum, which suggests that the estimation algorithm is very weak. The number of available channels is 200 channels in total and the bandwidth of the available network is limited. Under the foregoing conditions, the inventors have performed a simulation 10000 times to test the effect of the broadcast receiver according to exemplary embodiments. The simulation result is shown in FIG. 7.

In FIG. 7, an avoidance probability of the channel zapping time in accordance with a related art channel changing method in the LAN system is very low, that is, 3.89%. An avoidance probability of the channel zapping time in accordance with the related art channel changing method in the FTTH system is also very low, that is, 17.64%. However, when a channel changing method according to an exemplary embodiment is used, an avoidance probability of the channel zapping time is approximately 60% in the LAN system and 100% in the FTTH system. That is, the avoidance probability of 100% of the channel zapping time is shown at the time of the key event y (i.e., the second key input). A broadcast receiver according to an exemplary embodiment outputs broadcast data of a changed channel without the channel zapping time when a user inputs the second key.

Further, another exemplary embodiment of the present invention provides the channel changing method of the broadcast receiver.

More specifically, the channel changing method of the broadcast receiver includes selecting a changeable channel among a plurality of channels corresponding to at least one key input first out of a plurality of keys input sequentially by a user input unit; processing the changeable channel in advance before a completion of the plurality of keys input sequentially; and changing to a channel corresponding to the input of the plurality of keys if the sequential input of the plurality of keys is completed.

Selecting the channel may further include performing an estimation algorithm which estimates a changeable channel by using metadata to select the changeable channel.

Processing the changeable channel in advance includes downloading broadcast data of the changeable channel.

The channel changing method according to an exemplary embodiment has been described above in relation to FIGS. 4 and 5, and further description will be omitted.

Although a few exemplary embodiments of the present invention have been shown and described, it will be appreciated by those skilled in the art that changes may be made in these exemplary embodiments without departing from the principles of the invention, the scope of which is defined in the appended claims and their equivalents.

Attention is directed to all papers and documents which are filed concurrently with or previous to this specification in connection with this application and which are open to public inspection with this specification, and the contents of all such papers and documents are incorporated herein by reference.

All of the features disclosed in this specification (including any accompanying claims, abstract and drawings), and/or all of the steps of any method or process so disclosed, may be combined in any combination, except combinations where at least some of such features and/or steps are mutually exclusive.

Each feature disclosed in this specification (including any accompanying claims, abstract and drawings) may be replaced by alternative features serving the same, equivalent or similar purpose, unless expressly stated otherwise. Thus, unless expressly stated otherwise, each feature disclosed is one example only of a generic series of equivalent or similar features.

The invention is not restricted to the details of the foregoing embodiment(s). The invention extends to any novel one, or any novel combination, of the features disclosed in this specification (including any accompanying claims, abstract and drawings), or to any novel one, or any novel combination, of the steps of any method or process so disclosed.

## Claims

1. A broadcast receiver comprising:
a first receiver which receives broadcast data of a plurality of channels;
a second receiver which receives a plurality of keys input sequentially to select one of the plurality of channels; and
a controller which processes a changeable channel among a plurality of channels corresponding to at least one key input first among the plurality of keys input before a completion of the input of the plurality of keys from the second receiver.

2. The broadcast receiver according to claim 1, further comprising an input unit through which the plurality of keys are input to select one of the plurality of channels, wherein
the plurality of keys comprises a plurality of number keys, and
processing the changeable channel in advance comprises downloading, through the first receiver, broadcast data of a channel having a first number key as a first digit that is input first among the plurality of number keys.

3. The broadcast receiver according to claim 2, wherein the processing the changeable channel in advance comprises downloading, through the first receiver, of broadcast data of a channel having a second number key as a second digit that is input second among the plurality of number keys, out of the channels whose broadcast data are being downloaded.

4. The broadcast receiver according to claim 3, wherein the processing the changeable channel in advance comprises continuing, through the first receiver, to download broadcast data of a channel having a third number key as a third digit that is input third among the plurality of number keys, out of the channels whose broadcast data are being downloaded.

5. The broadcast receiver according to claim 1, further comprising an input unit through which the plurality of keys are input to select one of the plurality of channels, wherein
the plurality of keys comprises a plurality of character keys, and
processing the changeable channel in advance comprises downloading, through the first receiver, broadcast data of a channel having a first character key as a first character that is input first among the plurality of character keys.

6. The broadcast receiver according to claim 5, wherein the processing the changeable channel in advance comprises continuing, through the first receiver, to download broadcast data of a channel having a second character key as a second character that is input second among the plurality of character keys, out of the channels whose broadcast data are being downloaded.

7. The broadcast receiver according to claim 6, wherein the processing the changeable channel in advance comprises continuing, through the first receiver, to download broadcast data of a channel having a third character key as a third character that is input third among the plurality of character keys, out of the channels whose broadcast data are being downloaded.

8. The broadcast receiver according to claim 1, wherein the controller performs an estimation algorithm which estimates one or more channels to be changed to by using metadata associated with the changeable channel.

9. The broadcast receiver according to claim 1, wherein the broadcast receiver comprises an Internet protocol (IP) TV or an Internet protocol set-top box (IP STB), and
the first receiver comprises a communication unit which communicates with a router receiving broadcast data of a plurality of channels from an IP broadcast server to receive the broadcast data, and
the broadcast data comprises a multicast data packet.

10. The broadcast receiver according to claim 9, further comprising a message generator which generates an Internet group membership protocol message to request subscription of and withdrawal from a multicast group of the broadcast channel.

11. The broadcast receiver according to claim 10, wherein the controller controls the message generator to generate a subscription request message to the multicast group of the changeable channel and transmits the message to the router through the communication unit.

12. The broadcast receiver according to claim 10, wherein the controller controls the message generator to generate a withdrawal request message to the multicast group for any channels whose broadcast data are not downloaded and transmits the message to the router through the communication unit.

13. A channel changing method of a broadcast receiver, the channel changing method comprising:
selecting a changeable channel among a plurality of channels, the changeable channel corresponding to at least one key input first out of a plurality of keys input sequentially ;
processing the changeable channel before a completion of the sequential input of the plurality of keys; and
changing to a channel corresponding to the input of the plurality of keys when the sequential input of the plurality of keys is completed.

14. The method according to claim 13, wherein the selecting the changeable channel comprises performing an estimation algorithm which estimates a channel to be changed to by using metadata.

15. The method according to claim 13, wherein the processing the changeable channel comprises downloading broadcast data of the changeable channel.
